(19) Europäisches Patentamt / European Patent Office / Office européen des brevets

(11) **EP 4 462 133 A1**

(12) **EUROPEAN PATENT APPLICATION**

(43) Date of publication:
**13.11.2024 Bulletin 2024/46**

(51) International Patent Classification (IPC):
**G01Q 60/34** *(2010.01)* **G01Q 10/06** *(2010.01)*

(21) Application number: **23172411.3**

(52) Cooperative Patent Classification (CPC):
**G01Q 60/34; G01Q 10/06**

(22) Date of filing: **09.05.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nederlandse Organisatie voor toegepast-natuurwetenschappelijk Onderzoek TNO**
**2595 DA 's-Gravenhage (NL)**

(72) Inventors:
• **HERFST, Roelof**
**2595 DA 's-Gravenhage (NL)**
• **VAN ES, Marteen Hubertus**
**2595 DA 's-Gravenhage (NL)**

(74) Representative: **V.O.**
**P.O. Box 87930**
**2508 DH Den Haag (NL)**

(54) **AFM DEVICE AND METHOD**

(57)  An atomic force microscopy, AFM, device (1) is provided herein of which the cantilever (2) in operation of the AFM device has at least a first resonant mode with a first resonance frequency F1 and a second resonant mode with a second resonance frequency F2 that have the following relationship:

$$\exists N1, N2 : \frac{F2 - c.w2}{F1 + c.w1} < \frac{N2}{N1} < \frac{F2 + c.w2}{F1 - c.w1}$$

wherein N1 are natural numbers, such that 0 < N1 < N2 < 15, w1 and w2 respectively are the FWHM values of the first and the second resonance band respectively, and wherein c is a constant equal to 3.

Therewith a signal to noise ratio can be improved in a power efficient manner.

FIG 3

**Description**

BACKGROUND

The present invention pertains to an atomic force microscopy (AFM) device.

The present invention further pertains to an atomic force microscopy (AFM) method.

In a typical AFM device a tip on a cantilever is scanned over a surface of a sample to be examined. Therewith the cantilever is excited so as to perform a periodic motion comprising (at least) a first and a second periodic component. In Amplitude Modulation AFM, also referred to as tapping mode, one of the periodic components is excited by a dither. The amplitude of the (roughly) sinusoidal motion resulting from this excitation is determined by a lock-in amplifier and held constant by a control system in order to track topography. The dither is for example induced by a piezo-electric, electrostatic actuator or by a modulated laser focused at the cantilever portion closest to the carrier chip. The other periodic component is induced for example by optical excitation pulses directed to the sample. These pulses can temporarily and locally deform the surface of the sample near the tip of the cantilever, or induce a dipole force. This affects the movement of the cantilever due to the forces between the tip and the sample surface when the tip is in close proximity with the surface of the sample. Dependent on the exact tip-sample distance at the time of arrival of an optical excitation pulse, the resulting force can be attractive or repulsive. The movement of the cantilever induced by the excitation signals and affected by the tip-sample interaction is measured by a sensing system and indicated by a sensor signal. A detection system analyzes the sensor signal to detect therein physical properties related to the sample and or the operation of the AFM-device

Various options are available to perform operation of the AFM device, which are summarized in the following table.

| Mode | $f_{dit}$ | $f_{lsr}$ | $f_{top}$ | $f_{PiF}$ |
|------|-----------|-----------|-----------|-----------|
| HMD1 | F2 | F1 | F2 | F1 |
| HTD1 | F2 | F2 - F1 | F2 | F1 |
| HMD2 | F1 | F2 | F1 | F2 |
| HTD2 | F1 | F2 - F1 | F1 | F2 |

Therein the values F 1 and F2 indicate the frequencies of two mutually different resonant modes of the cantilever, wherein F2 > F1. The abbreviations HMD1 and HMD2 indicate first and second harmonic homodyne operation and the abbreviations HTD1 and HTD2 indicate first and second harmonic heterodyne operation. Further in the column with header $f_{dit}$, it is indicated at or near which frequency the dither is performed and the column $f_{lsr}$ indicates at or near which frequency optical excitation pulses are supplied. The resulting motion of the cantilever is monitored and a signal component in a range indicated by $f_{top}$ is used for determining the topography of the sample. A signal component in a range indicated by $f_{PiF}$ is used for controlling a feedback loop to maintain an average tip-sample distance based on sensed photo-induced forces.

The first two operational modes, i.e. the first harmonic homodyne mode (HMD1) and the first harmonic heterodyne mode (HTD1) result in the most sensitive measurement of the Photo-Induced-Force (PiF).

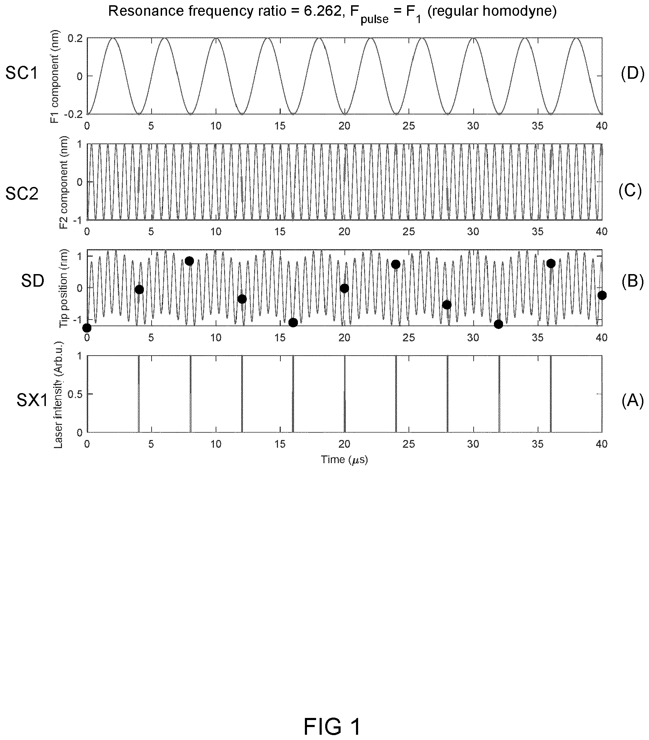

For regular cantilevers a ratio F2/F1 between a second resonance frequency F2 and a first resonance frequency F1 is in a range of about 6.2-6.4. Relevant signals of an AFM device with such a cantilever operating in a first harmonic homodyne mode are shown in FIG. 1. In the example shown the cantilever has a resonance frequency ratio of 6.262. As shown in FIG. 1A the cantilever is excited by laser pulses SX1 directed to a position of the sample surface facing the tip at a time interval of 4 microseconds, which corresponds to a pulse frequency of 250 kHz, corresponding to the first resonance frequency. In these, and subsequent figures, points superposed on the waveforms indicate in which phase of the waveforms the laser pulses occur. The cantilever is dithered with a second frequency of 1.565 MHz corresponding to its second resonance frequency F2. The resulting tip motion SD is shown in FIG. 1B. FIG. 1D and FIG. 1C respectively show a first signal component SC1 and a second signal component SC2 in the tip motion. It can be seen that the excitation of the cantilever is in phase with the SC 1 component of the tip motion. However, due to the contribution of the second signal component SC2 which has a frequency F2 that is 6.262 times higher than the frequency F1 of the first signal component, the laser pulse signal is not in phase with the motion of the tip. Only a fraction of the pulses arrive when the tip is in reasonably close proximity with the sample. Even when it is close there is constant variation in how close it is and whether it arrive just before or just after the tip makes contact with the sample.

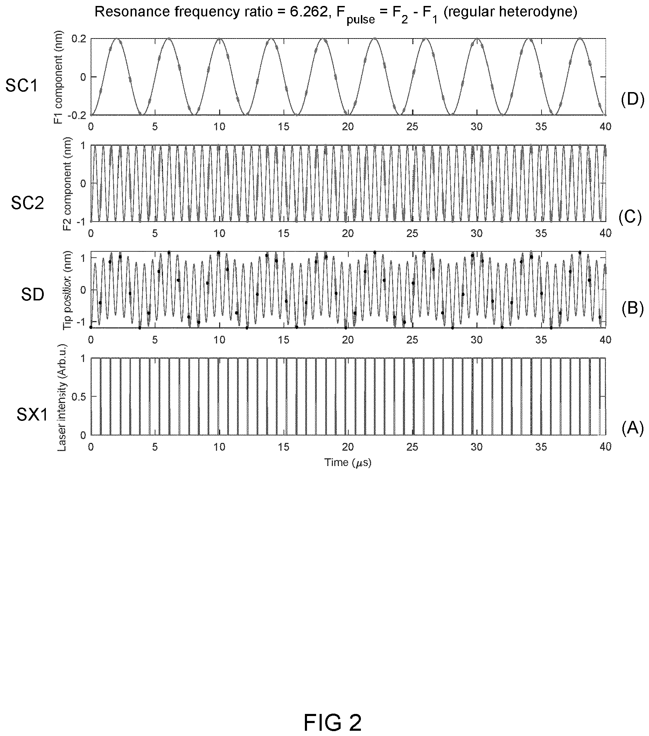

Similar observations can be made for the operation in the first harmonic heterodyne mode (HTD1) using the exemplary cantilever as is illustrated in FIG.2A - 2D. As shown in FIG. 2A, in this case the optical excitation signal is provided at a frequency F2-F1, which is 1.315 MHz. In this operational mode it is achieved that more pulses arrive when the tip is reasonably close to the surface. However, those that arrive at these suitable moments are not very well-aligned with the movement at the first harmonic, as is shown in FIG. 2D. Still, it tends to be more effective than homodyne at generating a PiF signal with high enough signal to noise ratio.

SUMMARY

It is a first object of the present invention to improve a signal to noise ratio of an atomic force microscopy (AFM) device .

It is a second object of the present invention to improve a signal to noise ratio of an atomic force microscopy (AFM) method.

In accordance with the first object an improved atomic force microscopy (AFM) device is provided as defined in claim 1.

In the improved AFM device a ratio of the first and the second resonance frequency have the following relationship:

$$\exists N1, N2: \frac{F2 - c.w2}{F1 + c.w1} < \frac{N2}{N1} < \frac{F2 + c.w2}{F1 - c.w1}$$

 wherein N1 are natural numbers, such that 0 < N1 < N2 < 15, w1 and w2 respectively are the full width half maximum (FWHM) values of the first and the second resonance band respectively, and wherein c is a constant equal to 3. For example, at the frequencies F 1-w 1, F1+w1 the amplitude of the response of the cantilever is half that of the response at the center frequency F1. Because a ratio between the first and the second resonance frequency is close to a ratio of natural numbers excitation of the cantilever can be achieved in a power efficient and a well controlled manner.

A ratio between the first and the second resonance frequency that is close to a ratio of natural numbers can be achieved by a proper design of the cantilever. Alternatively, a ratio between the first and the second resonance frequency can be tuned to a ratio close to a ratio of natural numbers for example by selecting a low-amplitude ratio setpoint in an AM-AFM operational mode using the second harmonic for topography. By selecting a low amplitude ratio setpoint, i.e. require a relatively small amplitude as compared to the amplitude of a freely vibrating cantilever, it is achieved that the first resonance frequency is increased, whereas the Q factor of both resonance modes is decreased. Therewith the ratio of the second resonance frequency and the first resonance frequency decreases, and the lower Q-factors of both resonance modes facilitate exciting the resonance modes slightly out of band. A typical conventional cantilever for example has a ratio of the second natural resonance frequency divided by the first natural resonance frequency which is in the range of about 6.2 to 6.4. By selecting a sufficiently low amplitude ratio setpoint for the AM-AFM operational mode the ratio between the second resonance frequency and the first resonance frequency during actual operation can be tuned to the value 6. Also a combination of these approaches is possible, wherein the cantilever is partly adapted to bring the ratio of the natural resonance frequencies closer to a rational number or a natural number and to further bring the ratio of the actual resonance frequencies closer to the rational or natural number by a proper choice of the amplitude ratio setpoint.

In a special case the rational number has the denominator 1, i.e. the rational number is a natural number. In homodyne operation a photovoltaic excitation pulse can be supplied at a predetermined phase in each cycle of the lower frequency mode.

In the more general case that the ratio is a rational number N2/N1, wherein N2, N1 are relative prime and N2 > N1, then a photovoltaic excitation pulse can be supplied each N1 cycles of the F 1 oscillation. For example, if the rational number is M+1/2 = (2M+1)/2 with M = integer then a photovoltaic pulse can be supplied each 2 cycles of the F1 oscillation. Similarly, if the ratio is a rational number M+ 1/3 = (3M+1)/3 with M = integer then a photovoltaic pulse can be supplied each 3 cycles of the F1 oscillation

In an embodiment the phase of the second excitation signal relative to the first excitation signal is maintained at a predetermined value. In one example thereof the predetermined value is selected to maximize an output amplitude with which an output amplitude of the component of the sensor signal (SD) in the first frequency band is maximized. In a further example thereof the predetermined value is selected to maintain operation in a repellent mode or in a still further example to maintain operation in an attractive mode.

In another embodiment the phase of the second excitation signal relative to the first excitation signal is continuously swept. As a result during operation, the tip-sample distance for subsequent optical excitation pulses differs. In this way sample information can be extracted for mutually different tip-sample interaction regimes. In an example of this embodiment this is achieved by slightly shifting the frequency of one of the excitation signals, while taking care that the frequency range traversed by that one of the excitation signals remains close enough to the corresponding resonance frequency of the mode to be excited. For example the frequency shift does not exceed that resonance frequency divided by the Q-factor for that resonance mode. It is also possible to simultaneously shift the frequency of both excitation signals in a counterphase manner, i.e. increasing one of the frequencies while decreasing the other one and reversely. In that case a frequency range traversed by an excitation signal can be smaller than in case it is the only excitation signal of which the frequency is shifted.

In an example output data obtained with the method is sampled with a sample frequency Fsample, e.g. corresponding to a pixel clock for topography, and the shift frequency Fshift is equal to an integer number K times the sample frequency divided by the frequency ratio F2/F1 (i.e. Fshift =K* Fsample / (F2/F1), with K an integer). In this way a consistent set of information is obtained for each sample/pixel. For example, if K = 2 then for each pixel information is obtained for two phases in the tip-sample interaction regime.

In an example the relative phase of the second excitation signal with respect to the first excitation signal changes in a non-linear manner. For example the change of relative phase is slowest for certain phases of interest. For example an optimal phase for maximizing a signal to noise ratio, an optimal phase for the attractive tip-sample regime and/or an optimal phase for the repulsive tip-sample interaction regime.

To explore the full interaction regime, it suffices that the phase of the second excitation signal relative to the phase of the first excitation signal traverses a range of $2\pi$/(F2/F1). In an example the time interval for traversing this range is equal to 1/ (K*Fsample).

It is noted that the sample frequency does not need to be constant. In an embodiment the sample frequency is increased in regions of the sample having a complex topography and reduced in less complex regions. In case a shift frequency of an excitation signal is related to the sample frequency, the shift frequency is accordingly increased or reduced. In case the time interval for traversing a relative phase range is related to the sample frequency, the time interval is accordingly shortened or extended.

In an embodiment the relative phase of the second excitation signal with respect to the first excitation signal is controlled in a feedforward manner. Alternatively or additionally the relative phase of the second excitation signal with respect to the first excitation signal is controlled with a feedback loop, e.g. a feedback loop that minimizes a measured phase of the second harmonic relative to a setpoint.

In accordance with the second object an improved atomic force microscopy (AFM) method is provided as defined in claim 15.

BRIEF DESCRIPTION OF THE DRAWINGS

As discussed above,

FIG. 1A - 1D shows various signals typical for a conventional AFM-method according to a homodyne operational mode;

FIG. 2A - 2D shows various signals typical for a conventional AFM-method according to a heterodyne operational mode;

Aspects of the present invention are described in more detail with reference to the following drawings: Therein:

FIG. 3 schematically shows an embodiment of an AFM device according to the present invention;

FIG. 4A - 4D shows representative signals occurring in an embodiment of the improved AFM device in a homodyne operational mode with a repulsive photo induce force regime;

FIG. 5A - 5D shows representative signals occurring in an embodiment of the improved AFM device in a homodyne operational mode with an attractive photo induce force regime;

FIG. 6A - 6D shows representative signals occurring in an embodiment of the improved AFM device in a homodyne operational mode with a neutral photo induce force regime;

FIG. 7 shows an embodiment of an improved AFM method;

FIG. 8 aspects of the photo induced force signal as a function of the phase of the second excitation signal relative to that of the first excitation signal;

FIG. 9 shows an alternative embodiment of an improved AFM method;

FIG. 10A - 10C subsequently show the signal to noise ratio SNR observed subsequently for the case of homodyne operation with a 1:6 harmonic cantilever, for the case of heterodyne operation with a 1:6 harmonic cantilever and for the case of: heterodyne operation with a regular cantilever;

FIG. 11A, 11B show a pair of AFM-IR images obtained with an embodiment of the improved AFM device.

DETAILED DESCRIPTION OF EMBODIMENTS

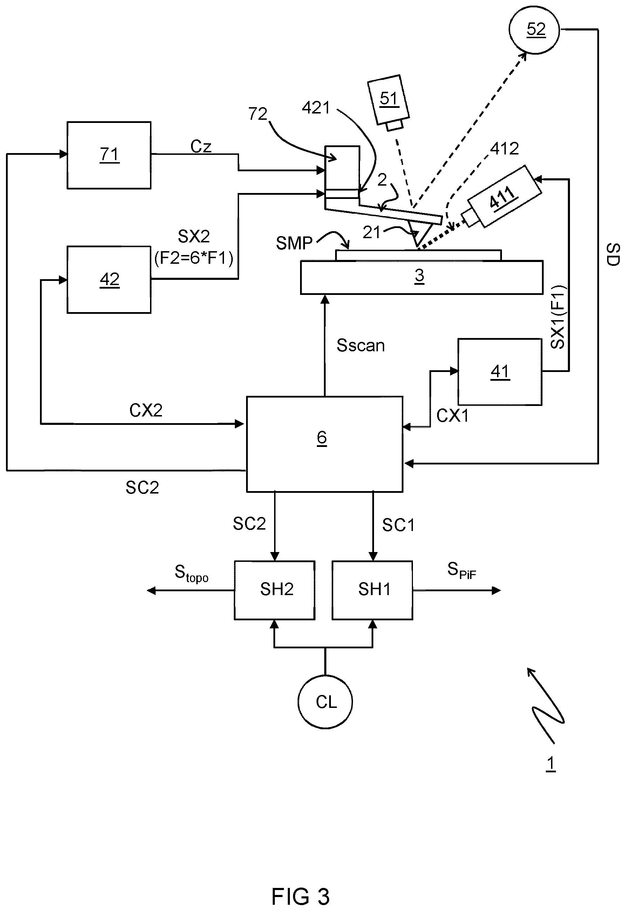

FIG. 3 schematically shows an AFM-IR device 1 comprising a cantilever 2, a scanning system 3, an excitation system 41, 42, a sensing system 51, 52 and a detection system 6.

As shown in FIG. 3, the cantilever 2 has a tip 21. In operation of the AFM-IR device 1 the cantilever has at least a first resonant mode with a first resonance frequency F1 and a second resonant mode with a second resonance frequency F2.

The scanning system 3 is configured to provide for a relative movement of the tip 21 along a surface of a sample SMP. In the example shown this is the case that the scanning system is an XY-table that is controlled by a drive signal Sscan from the detection system 6. Alternatively or additionally the detection system controls an actuator that moves the cantilever. The relative movement may be according to a predetermined pattern at a predetermined speed. Alternatively a speed of the relative movement is controlled dependent on detected or expected sample features. For example the speed of the relative movement may be reduced when the tip 21 is in a region of the sample SMP having surface features with a high spatial frequency.

The excitation system 41, 411, 42, 421 is configured to excite the cantilever with at least a first excitation signal SX1 and a second excitation signal SX2. In the example shown the excitation system comprises a first signal generator 41 that provides the first excitation signal SX1 to a laser 411 that directs a beam 412 of optical radiation to an interface between the tip 21 and the surface of the sample SMP. The pulsed beam 412 of optical radiation rendered by the laser 411 in response to the first excitation signal SX1 locally causes a temporary deformation of the surface near the tip 21, which causes a corresponding modulation of a tip-sample force. In an alternative embodiment the first excitation signal is used to electrostatically excite the cantilever by modulating a voltage difference between the surface of the sample SMP and the tip 21. In the example shown the excitation system comprises a second signal generator 42 that provides the second excitation signal SX2 to an actuator 421 coupled to the cantilever 2. The actuator 421 is for example a piezo-electric or, electrostatic actuator. In another example the second excitation signal SX2 is used to modulate a further laser directed at a portion of the cantilever 2 remote from the tip 21, i.e. near a point of suspension. The first excitation signal SX1 has a first excitation frequency that is at least substantially equal either to the first resonance frequency F1 or to a difference between the second resonance frequency F2 and the first resonance frequency F1. The second excitation signal has a second excitation frequency that is at least substantially equal to said second resonance frequency F2.

In the first case, wherein the first excitation frequency is at least substantially equal to the first resonance frequency F1, the AFM-device 1 is operated in a homodyne mode. In the second case, wherein the first excitation frequency is at least substantially equal to the difference between the second resonance frequency F2 and the first resonance frequency F1, the AFM-device 1 is operated in a heterodyne mode.

The sensing system 51, 52 is configured to provide a sensor signal SD indicative for a motion of the cantilever 2. In the example shown, the sensing system comprises a laser 51 directed at a surface of the cantilever 2 near the tip 21 and an optical sensor 52, for example a four quadrant optical sensor. Other example are motion sensing with optical interferometry, capacitance sensing, piezoresistive sensing, piezoelectric sensing and the like.

The detection system 6 is configured to detect in the sensor signal SD at least a first physical property in a first signal component SC 1 of the sensor signal SD in a first frequency band centered around the first resonance frequency F1 and to detect a second physical property in a second signal component SC2 of the sensor signal SD in second frequency band centered around the second resonance frequency F2. In this example the first physical property is a photo induced force and the second physical property is a topography of the sample. Other examples of a first physical property are an electrostatic force in EFM operation, a piezoelectric force in PFM operation and a magnetic force in MFM operation.

The first and the second resonance frequency have the following relationship:

$$\exists N1, N2: \frac{F2 - c.w2}{F1 + c.w1} < \frac{N2}{N1} < \frac{F2 + c.w2}{F1 - c.w1}$$

wherein N1 are natural numbers, such that 0 < N1 < N2 < 15, w1 and w2 respectively are the FWHM values of the first and the second resonance band respectively, and wherein c is a constant equal to 3.

Due to dampening of the cantilever during operation its first and second resonance frequency during operation of the AFM-device will in practice be lower than its natural first and second resonance frequency respectively. It suffices that the relationship is complied with in operation of the AFM-device 1. Even in case that the natural resonance frequencies of cantilever do not comply with the specified relationship it can be achieved by a controlled dampening and frequency shifting of the resonance modes that the resonance frequencies during operation do comply with this relationship.

As noted, the first excitation frequency is at least substantially equal either to the first resonance frequency F1 or to a difference between the second resonance frequency F2 and the first resonance frequency F1. Also the second excitation frequency is at least substantially equal to said second resonance frequency F2. This requirement is to achieve cantilever excitation with a modest amount of power. For homodyne operation excitation power is minimized when the first excitation frequency is equal to the first resonance frequency F1 and the second excitation frequency is equal to the second resonance frequency F2. In practice an excitation frequency may deviate from a resonance frequency. This may even be desired, for example for the purpose of feedback control. For example the second excitation frequency may be slightly higher than the second resonance frequency. If the average tip-sample distance decreases, the motion of the cantilever is dampened and the resonance frequencies decrease. The resonance amplitude then also decreases, partly due to the dampening of the cantilever and partly due to the increasing frequency difference between the excitation frequency and the resonance frequency. The resonance amplitude is therewith an indication for the tip sample distance so that it can be used to control an average vertical position of the tip 21 relative to the surface of the sample SMP. Similarly the tip-sample distance can be controlled when setting the second excitation frequency may be slightly lower than the second resonance frequency which is common practice for AFM where the 1st mode is used for sensing tip-sample distance. In the example shown, a z-actuator 72 is controlled by a z-controller 71 responsive to the signal component SC2 comprised in the sensor signal SD. In response thereto the z-controller 71 issues the control signal Cz to the z-controller (71). The signal component SC2 is indicative of an average distance between tip and sample. As the control loop maintains the average tip-sample distance at a constant value, the vertical position of the head with cantilever changes according to the height of the surface features of the sample. Therewith the signal component SC2 is also indirectly indicative for a measured topography of the sample. Based on this signal component SC2 or on the control signal Cz, a topography signal $S_{topo}$ is outputted with a sample frequency according to sample clock CL by a sampling circuit SH2. The signal component SC1 is indicative for a measured photo induced force. Based on this signal component SC1 a signal $S_{PiF}$ is outputted with the sample frequency by the sampling circuit SH1. In another exemplary embodiment, the first excitation frequency is chosen slightly above F1. When the z-controller brings the cantilever in close proximity of the sample, F1 tends to shift upward, thereby coming closer to the drive frequency and thereby more efficiently exciting the cantilever at the first mode.

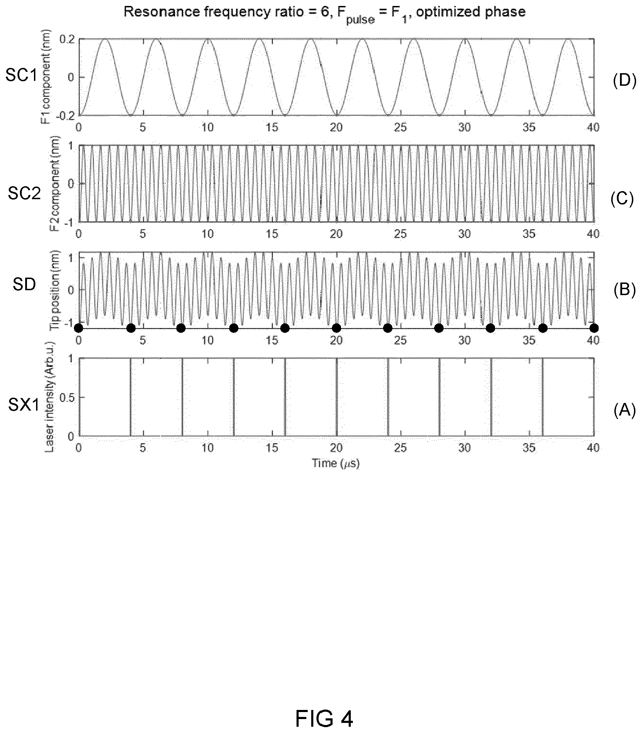

FIG. 4A - 4D shows representative signals occurring in the improved AFM device in a homodyne operational mode. The representative signals are shown in the same way as those in FIG. 1A - 1D. I.e. FIG. 4A shows the excitation of the cantilever by laser pulses SX1. The cantilever is further excited by a dither signal. FIG. 4B shows the resulting cantilever motion as indicated by the sensor signal SD and FIG. 4D and FIG. 4C respectively show the contribution of a first frequency component at frequency F1 and the contribution of a second frequency component at frequency F2.

In this example the resonance frequency of the first resonant mode of the cantilever during operation is 250 kHz. The resonance frequency of the second resonant mode is 6 times higher, i.e. 1500 kHz. It can be seen that the excitation of the cantilever with the signal SX1 now has a predetermined phase with respect to the F2 component of the tip motion. More specifically in the example of FIG. 4A - 4D the excitation pulse SX1 is supplied at the point in time that the tip-sample distance is minimal, when the tip-sample interaction regime is repulsive.

Whereas in this example the ratio between the resonance frequency of the second resonant mode and the resonance frequency of the first resonant mode in operation is equal to the natural 6 times also other embodiments are conceivable wherein the ratio is equal to another natural number, e.g. 5,4, 3 or 2. Also embodiments are conceivable wherein the ratio is a rational number, for example of the type M+1/2 = (2M+1)/2 or of the type M+1/3 = (3M+1)/3 with M = integer.

The first and the second excitation frequencies are substantially equal to the resonance frequency of the first and the second resonant mode respectively. A modest deviation between the excitation frequency and the resonance frequency of the resonant mode to be excited therewith is allowable. However, in order to operate the AFM-device in a power efficient manner the excitation frequencies should be selected close to the cantilever resonance frequencies in homodyne mode, or a linear combination thereof in heterodyne mode.

For practical purposes, in the homodyne case the first excitation frequency is considered as substantially equal to the first resonance frequency if the first excitation frequency is with the FWHM range of the first resonance frequency and the second excitation frequency is considered as substantially equal to the second resonance frequency if the second excitation frequency is with the FWHM range of the second resonance frequency. Likewise in the heterodyne case the second excitation frequency is considered as substantially equal to the second resonance frequency if the second excitation frequency is with the FWHM range of the second resonance frequency. The first excitation frequency in that case is considered as substantially equal to the first resonance frequency if the first excitation frequency does not differ more from the second resonance frequency and the first resonance frequency than half the sum of the FWHM ranges of the first resonance frequency and the second resonance frequency.

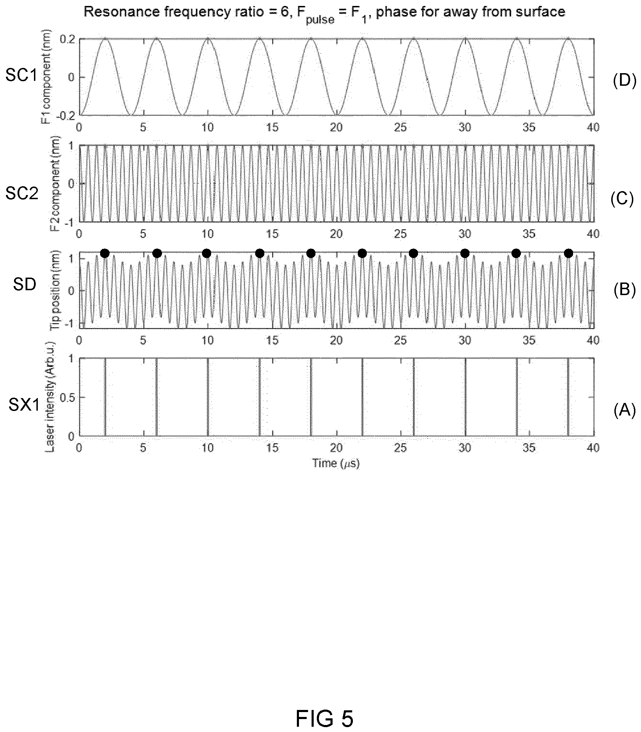

FIG. 5A - 5D show a second example. Also in this case the excitation of the cantilever with the signal SX1 has a predetermined phase with respect to the SC2 component of the tip motion SD. In this example the pulse signal SX1 is supplied at the point in time that the tip-sample distance is at its maximum when the tip-sample interaction is attractive.

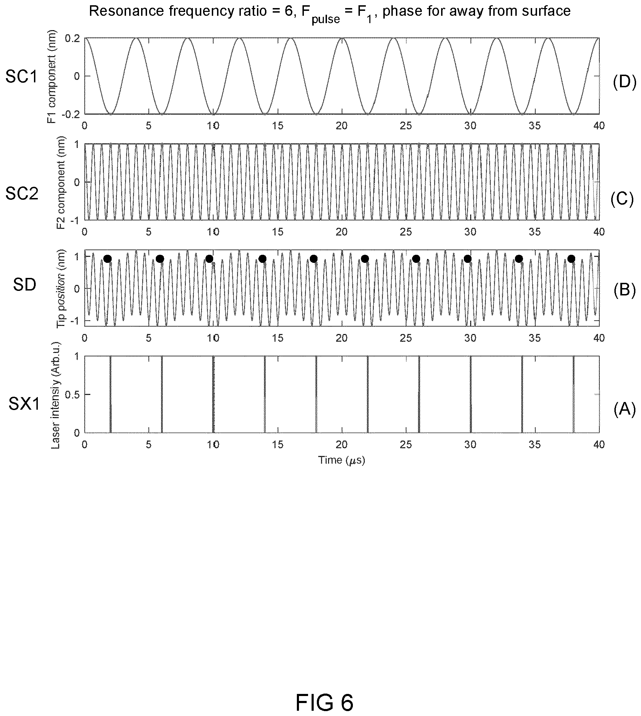

FIG. 6A - 6D show a third example. Also in this case the excitation of the cantilever with the signal SX1 has a predetermined phase with respect to the SC2 component of the tip motion SD. In this example the pulse signal SX1 is supplied at the point in time suitable to determine a background force.

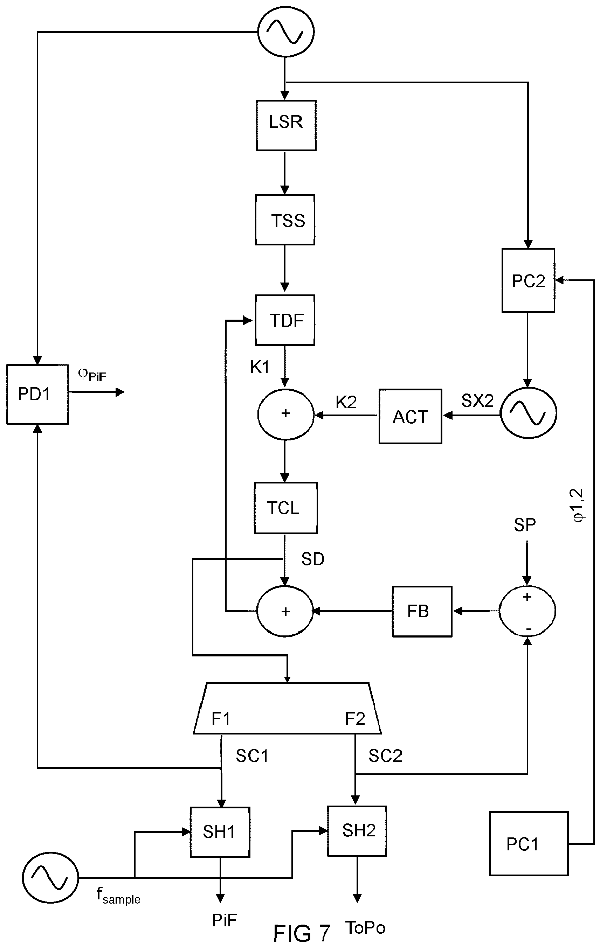

An embodiment of an improved AFM method is now discussed with reference to FIG. 7. The method comprises providing a relative movement of a tip 21 on a cantilever 2 along a surface of a sample SMP (See FIG. 3). (At least) while performing the method the cantilever 2 has at least a first resonant mode with a first resonance frequency F1 and a second resonant mode with a second resonance frequency F2 which comply with the following relationship: ∃N1,N2:(F2-c.w2)/(F1+c.w1)<N2/N1<(F2+c.w2)/(F1-c.w1) wherein N1 are natural numbers, such that 0 < N1 < N2 < 15, w1 and w2 respectively are the FWHM values of the first and the second resonance band respectively, and wherein c is a constant equal to 3.

The cantilever 2 is excited with at least a first excitation signal SX1 and a second excitation signal SX2. The first excitation signal SX1 induces a time-dependent force K1 in that the first excitation signal SX1 drives a laser LSR, the heat induced by the laser beam locally deforms the sample surface, which is indicated by block TSS and this affects the tip-sample interaction as indicated by block TDF. In addition, the heat induced by the laser beam can induce a dipole force. In other embodiments the cantilever is excited by the first excitation signal using different means, e.g. electrostatically. The second excitation signal SX2 drives an actuator that induces a second time-dependent force on the cantilever. In case of homodyne operation the first excitation signal has a first excitation frequency that is at least substantially equal to the first resonance frequency F1 and the second excitation signal has a second excitation frequency that is at least substantially equal to the second resonance frequency F2. In case of heterodyne operation the first excitation frequency is at least substantially equal to a difference between the second resonance frequency F2 and the first resonance frequency F1 and as in the homodyne case, the second excitation frequency is at least substantially equal to the second resonance frequency F2.

The time-dependent forces K1, K2 determine the motion of the cantilever according to a transfer function TCL and the motion is indicated by the sensor signal SD.

A first signal component SC 1 therein, in the frequency range including the first resonance frequency is indicative for a first physical property, here the photo induced force. A signal PiF specifying the amplitude of the photo induced force is derived from the signal component SC1 and sampled with a frequency fsample in a sampling element SH1. A phase comparison element PD1 further determines a phase difference $\varphi_{PiF}$ between the photo induced force indicated by the first signal component SC 1 and the first excitation signal SX1. Also the signal indicating the phase difference $\varphi_{PiF}$ may be sampled. A second signal component SC2 of the sensor signal SD, in the frequency range including the second resonance frequency is indicative for a second physical property, here tip-sample distance, which is indicative for a topography of the sample. A signal specifying the tip sample distance is derived from the second signal component SC2 and sampled with a frequency fsample in a sampling element SH2.

The second signal component is further used to control an average value of the tip-sample distance with a feedback loop FB that minimizes an error with respect to a setpoint SP. In an embodiment the output of the feedback loop FB is used to further as an indication about the topography of the sample. The phase $\varphi1,2$ of the second excitation signal SX2 relative to the phase of the first excitation signal is controlled by phase control element PC1. The phase $\varphi1,2$ is the distance between a zero-crossing of SX1 and a zero-crossing of SX2. A second phase control element PC2 receive the first excitation signal SX1 and adjusts the phase of the second excitation signal SX2 to achieve the phase difference specified by the phase control element PC1.

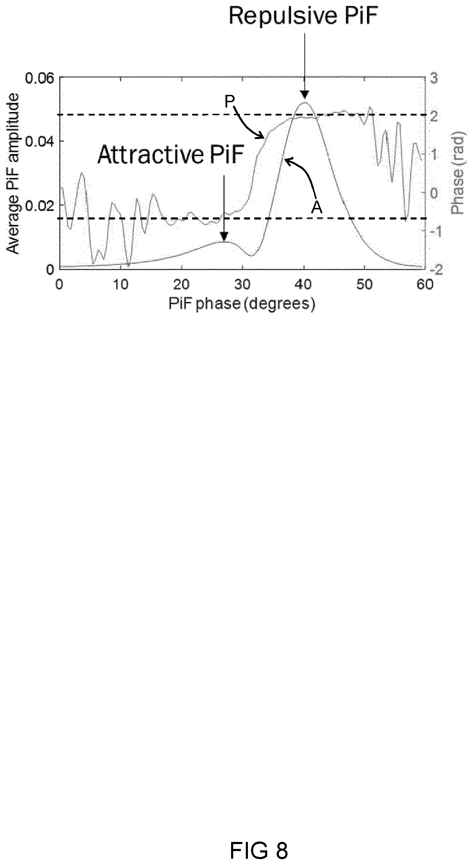

FIG. 8 shows how the operation of the improved AFM-device is affected by the phase $\varphi1,2$ (indicated in the horizontal axis) of the second excitation signal SX2 relative to that of the first excitation signal SX1. FIG. 8 includes a first curve A that shows the average amplitude of the photo induced force according to the scale on the left side and a second curve P that shows the phase of the first signal component SC 1 relative to the excitation signal SX1 according to the scale at the right side. It can be seen that when the phase of the signal SX2 relative to that of SX1 is increased starting from 0, the photo induced force PiF as indicated by the first curve A achieves a first maximum corresponding to an attractive PiF tip-sample regime, subsequently the photo induced force PiF decreases and then increases again to a second, higher maximum which indicates the repulsive PiF tip-sample regime. The second curve P shows that the phase of the first signal component SC 1 relative to the excitation signal SX1 jumps from about -0.7 rad to +2 rad when going from the attractive PiF regime to the repulsive PiF regime.

In one embodiment the phase difference $\varphi1,2$ is specified to be at a constant value. For example, as described with reference to FIG. 4A - 4D the phase control element PC1 sets the phase difference $\varphi1,2$ at a value for which it is achieved that the excitation pulse is supplied at the point in time that the tip-sample distance is minimal, i.e. at a tip-sample distance with repulsive interaction. In another example, as described with reference to FIG. 5A - 5D the phase control element PC1 sets the phase difference $\varphi1,2$ at a value for which it is achieved that the excitation pulse is supplied at the point in time that the tip-sample distance is maximal, i.e. at a tip-sample distance with attractive interaction. In another example, as described with reference to FIG. 6A - 6D the phase control element PC1 sets the phase difference $\varphi1,2$ at a value for which it is achieved that the excitation pulse is supplied at the point in time that the photo induced force is neither attractive nor repulsive. Therewith a background signal can be obtained.

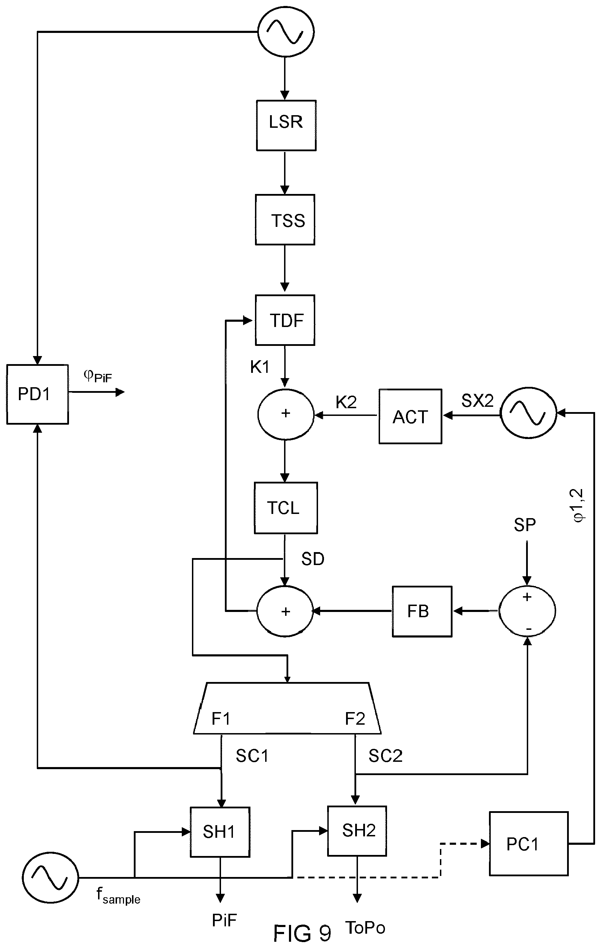

In another embodiment the phase control element PC1 is configured to sweep the phase of the second excitation signal SX2 relative to the first excitation signal SX1. As a result during operation, the tip-sample distance for subsequent optical excitation pulses differs. In this way sample information can be extracted for mutually different tip-sample interaction regimes. In an example of this embodiment as shown in FIG. 9 this is achieved by slightly shifting the frequency of one of the excitation signals, here the second excitation signal SX2, while taking care that the frequency range traversed by that one of the excitation signals remains close enough to the corresponding resonance frequency of the mode to be excited. For example the frequency range does not exceed that resonance frequency divided by the Q-factor for that resonance mode.

In an example as indicated by the dashed arrow to phase control element PC 1, the shift frequency Fshift is equal to an integer number K times the sample frequency divided by the frequency ratio F2/F1 (i.e. Fmod =K* Fsample / (F2/F1), with K an integer). In this way a consistent set of information is obtained for each sample/pixel. For example, if K = 2 then for each pixel information is obtained for two phases in the tip-sample interaction regime.

In an example the phase control element PC 1 causes the relative phase of the second excitation signal with respect to the first excitation signal to change in a non-linear manner as a function of time. For example the phase control element PC 1 causes a relatively slow change of relative phase for certain phases of interest. The phase of interest are for example an optimal phase for maximizing a signal to noise ratio, an optimal phase for the attractive tip-sample regime and/or an optimal phase for the repulsive tip-sample interaction regime.

To explore the full interaction regime, it suffices that the phase of the second excitation signal relative to the phase of the first excitation signal traverses a range of $2\pi/(F2/F1)$. For example, if the frequency ratio F2/F1 is equal to 6, it suffices that the range traversed by the relative phase $\varphi1,2$ is equal to $\pi/3$. In an example the time interval for traversing this range is equal to 1/ (K*Fsample).

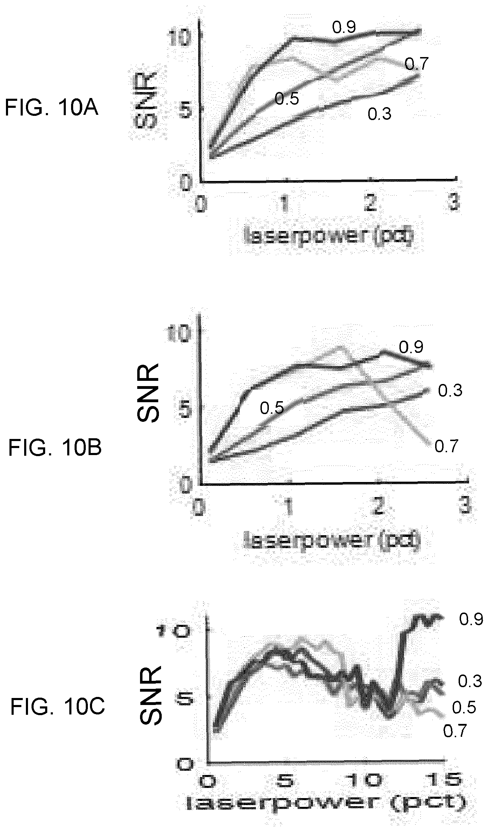

FIG. 10A - 10C shows a comparison of a signal to noise ratio SNR of the PiF signal as a function of the laser power used for optical excitation (SX1) and for different levels of the excitation signal (SX2) for dithering in the following three cases. The laser power is expressed as a percentage of a maximum value.

FIG. 10A shows the signal to noise ratio SNR for the case of homodyne operation with a 1:6 harmonic cantilever.
FIG. 10B shows the signal to noise ratio SNR for the case of heterodyne operation with a 1:6 harmonic cantilever.
FIG. 10C shows the signal to noise ratio SNR for the case of heterodyne operation with a regular cantilever (1: 6.2 - 6.3)

It is noted that a harmonic cantilever is defined herein as a cantilever that has a harmonic behavior in the conditions that apply during operation.

As becomes apparent from this comparison, use of a harmonic cantilever significantly mitigates power usage in case of homodyne operation (1:6 actuation). Similarly use of a harmonic cantilever in heterodyne operation (5:6 actuation) significantly mitigates power usage as compared to regular heterodyne operation.

It can be concluded from a comparison of the results shown in FIG. 10A -10C that in order to achieve a signal to noise ratio SNR with a regular cantilever that is comparable to that achieved with a harmonic cantilever the laser power has to be increased with a factor five. Or alternatively stated, a reduction of laser power with a factor five can be achieved with the measures provided by the present disclosure. Or again alternatively stated a signal to noise ratio can be improved without requiring additional laser power.

As described above the measures provided by the present disclosure also render it possible to reliably control the phase of the first excitation signal relative to the movement of the cantilever. Therewith it can be achieved that the optical excitation can take place in a controllable manner taking into account the tip-sample distance and therewith the tip-sample interaction regime. Also it is possible to controllably sweep the phase of the first excitation signal relative to the movement of the cantilever while performing measurements. For example while performing the measurements to obtain AFM-IR image data the frequency of the second excitation signal is shifted such that for each pixel of the AFM-IR image a complete phase sweep is performed. This renders it possible to extract for each pixel the PiF signal the PiF signal at maximum attractive force and the PiF signal at maximum repulsive force. In order to achieve the phase sweep the frequency ratio of the excitation signals needs to deviate slightly from a ratio equal to a natural number or a rational number. The frequency of the excitation signal that is being shifted can therewith remain sufficiently close to the resonance frequency of the resonant mode of the cantilever to be excited therewith, so that this does not cause a substantial loss of power efficiency.

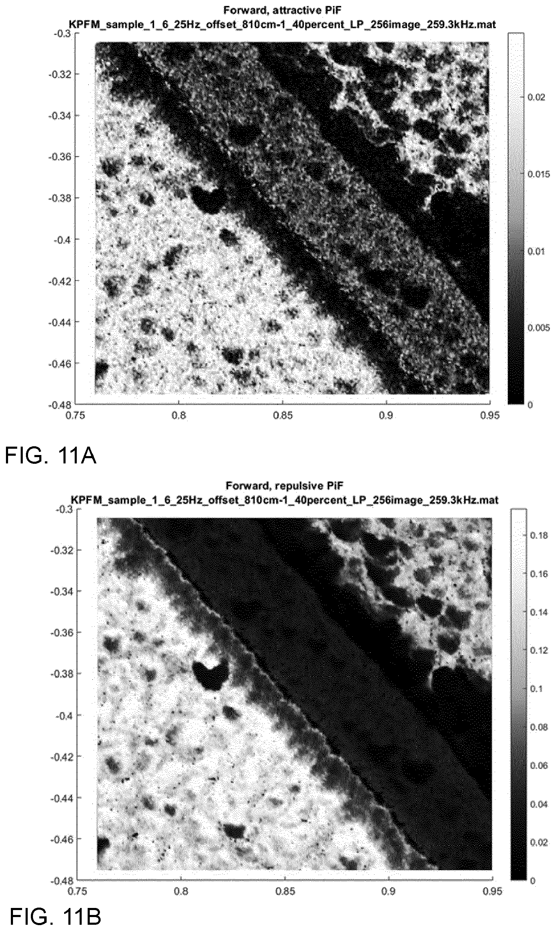

By way of example a pair of AFM-IR images of a sample obtained in this manner is shown in FIG. 11A, 11B. Therein FIG. 11A shows the AFM-IR image data obtained for the phase wherein the photo induce force is maximally attractive. FIG. 11B shows the AFM-IR image data obtained for the phase wherein the photo induce force is maximally repulsive. Both images were obtained simultaneously, i.e. not in two consecutive scans of the same area.

While the two images are quite similar, there are a few differences:

- Image at maximum attractive PiF has lower signal strength
- Image at maximum attractive PiF signal is a bit noisier
- There seems to be a difference in the details that are highlighted:
  for attractive PiF image, more details are visible in dark diagonal section, and the transition from high signal in bottom left to the low signal in the central diagonal section is different. This hints at a slightly higher effective resolution for attractive PiF signals.

**Claims**

1. An atomic force microscopy, AFM, device (1) comprising:

a cantilever (2) having a tip (21), the cantilever in operation of the AFM device having at least a first resonant mode with a first resonance frequency F1 and a second resonant mode with a second resonance frequency F2;
a scanning system (3) to provide for a relative movement of the tip (21) along a surface of a sample (smp);
an excitation system (41, 411, 42, 421) to excite the cantilever (2) with at least a first excitation signal (SX1) and a second excitation signal (SX2), which first excitation signal has a first excitation frequency that is at least substantially equal either to the first resonance frequency (F1) or to a difference between the second resonance frequency and the first resonance frequency and the second excitation signal has a second excitation frequency that is at least substantially equal to the second resonance frequency (F2);
a sensing system (51, 52) to provide a sensor signal (SD) indicative for a motion of the cantilever (2);
a detection system (6) to detect in the sensor signal (SD) at least a first physical property in a first frequency band centered around the first resonance frequency (F1) and to detect a second physical property in a second frequency band centered around the second resonance frequency (F2), **characterized in that** the first and the second resonance frequency have the following relationship:

$$\exists N1, N2: \frac{F2 - c.w2}{F1 + c.w1} < \frac{N2}{N1} < \frac{F2 + c.w2}{F1 - c.w1}$$

wherein N1 are natural numbers, such that 0 < N1 < N2 < 15, w1 and w2 respectively are the FWHM values of the first and the second resonance band respectively, and wherein c is a constant equal to 3.

2. The AFM device according to claim 1, wherein N1 = 1.

3. The AFM device according to claim 1, wherein N1 = 2.

4. The AFM device according to claim 1, wherein N1 = 3.

5. The AFM-device according to any of the preceding claims, wherein the excitation system is configured to maintain the phase of the second excitation signal relative to the first excitation signal at a predetermined value.

6. The AFM-device according to claim 5, wherein the excitation system is configured to maintain the phase of the second excitation signal relative to the first excitation signal at a value with which an output amplitude of the component of the sensor signal (SD) in the first frequency band is maximized.

7. The AFM-device according to claim 5, wherein the excitation system is configured to maintain the phase of the second excitation signal relative to the first excitation signal at a value for which a tip-sample interaction regime is repellant at a point in time of first excitation signal pulses.

8. The AFM-device according to claim 5, wherein the excitation system is configured to maintain the phase of the second excitation signal relative to the first excitation signal at a value for which a tip-sample interaction regime is attractive at a point in time of first excitation signal pulses.

9. The AFM-device according to any of the claims 1-4, wherein the excitation system is configured to sweep the phase of the second excitation signal relative to the first excitation signal.

10. The AFM-device according to claim 9, wherein the excitation system is configured to sweep the phase of the second excitation signal relative to the first excitation signal by shifting a frequency of at least one of the excitation signals.

11. The AFM-device according to claim 10, being configured to sample output data with a sample frequency (Fsample) wherein a shift frequency (Fshift) with which the frequency of said at least one of the excitation signals is shifted is equal to an integer number (K) times the sample frequency (Fsample) divided by the frequency ratio (F2/F1).

12. The AFM-device according to claim 11, wherein the time interval for performing a sweep is equal to 1/ (K*Fsample) .

13. The AFM-device according to any of claims 10-12 wherein the excitation system is configured to cause the relative phase of the second excitation signal to change in a non-linear manner with respect to the first excitation signal.

14. A method for performing atomic force microscopy comprising:

providing a relative movement of a tip (21) on a cantilever (2) along a surface of a sample (smp), which cantilever while performing the method has at least a first resonant mode with a first resonance frequency (F1) and a second resonant mode with a second resonance frequency (F2);
exciting the cantilever (2) with at least a first excitation signal (SX1) and a second excitation signal (SX2), which first excitation signal has a first excitation frequency that is at least substantially equal either to the first resonance frequency (F1) or to a difference between the second resonance frequency (F2) and the first resonance frequency (F1) and which second excitation signal has a second excitation frequency that is at least substantially equal to the second resonance frequency (F2);
providing a sensor signal (SD) indicative for a motion of the cantilever (2);
detecting in the sensor signal (SD) at least a first physical property in a first frequency band centered around the first resonance frequency (F1) and a second physical property in a second frequency band centered around the second resonance frequency (F2), **characterized in that** the first and the second resonance frequency have the following relationship:

$$\exists N1,N2 : (F2-c.w2)/(F1+c.w1) < N2/N1 < (F2+c.w2)/(F1-c.w1)$$

wherein N1 are natural numbers, such that 0 < N1 < N2 < 15, w1 and w2 respectively are the FWHM values of the first and the second resonance band respectively, and wherein c is a constant equal to 3.

Resonance frequency ratio = 6.262, $F_{pulse}$ = $F_1$ (regular homodyne)

FIG 1

Resonance frequency ratio = 6.262, $F_{pulse} = F_2 - F_1$ (regular heterodyne)

FIG 2

FIG 3

FIG 4

FIG 5

FIG 6

16

FIG 7

FIG 8

FIG 9

FIG. 10A

FIG. 10B

FIG. 10C

Forward, attractive PiF
KPFM_sample_1_6_25Hz_offset_810cm-1_40percent_LP_256image_259.3kHz.mat

FIG. 11A

Forward, repulsive PiF
KPFM_sample_1_6_25Hz_offset_810cm-1_40percent_LP_256image_259.3kHz.mat

FIG. 11B

Europäisches
Patentamt

European
Patent Office

Office européen
des brevets

# EUROPEAN SEARCH REPORT

**Application Number**

EP 23 17 2411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/163559 A1 (GOVYADINOV ALEXANDER A [DE] ET AL) 26 May 2022 (2022-05-26) | 1-6,8-14 | INV. G01Q60/34 G01Q10/06 |
| Y | * figure 1b * * paragraph [0030] – paragraph [0057] * | 7 | |
| Y | US 2013/117895 A1 (PROKSCH ROGER B [US] ET AL) 9 May 2013 (2013-05-09) | 7 | |
| A | * paragraph [0164] * | 1-6,8-14 | |

**TECHNICAL FIELDS SEARCHED (IPC)**

G01Q

The present search report has been drawn up for all claims

| Place of search | Date of completion of the search | Examiner |
|---|---|---|
| Berlin | 10 October 2023 | Polesello, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 17 2411

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2023

| Patent document cited in search report | | Publication date | Patent family member(s) | | Publication date |
|---|---|---|---|---|---|
| US 2022163559 | A1 | 26-05-2022 | CN | 114008463 A | 01-02-2022 |
| | | | EP | 3722817 A1 | 14-10-2020 |
| | | | US | 2022163559 A1 | 26-05-2022 |
| | | | WO | 2020208133 A1 | 15-10-2020 |
| US 2013117895 | A1 | 09-05-2013 | US | 2013117895 A1 | 09-05-2013 |
| | | | US | 2016282384 A1 | 29-09-2016 |
| | | | US | 2017299628 A1 | 19-10-2017 |

EPO FORM P0459